Europäisches Patentamt

European Patent Office

Office européen des brevets

(11) Veröffentlichungsnummer: **0 440 882 A1**

## EUROPÄISCHE PATENTANMELDUNG

(21) Anmeldenummer: 90119592.5

(22) Anmeldetag: 12.10.90

(51) Int. Cl.5: **A01C 17/00**

(30) Priorität: 09.02.90 DE 4003945
07.09.90 EP 90117247

(43) Veröffentlichungstag der Anmeldung:
**14.08.91 Patentblatt 91/33**

(84) Benannte Vertragsstaaten:
**AT BE DE DK FR GB IT NL SE**

(71) Anmelder: **Amazonen-Werke H. Dreyer GmbH & Co. KG**
**Am Amazonenwerk 9-13**
**W-4507 Hasbergen-Gaste(DE)**

(72) Erfinder: **Dreyer, Heinz, Dipl.-Ing., Dr.**
**Am Amazonenwerk 7**
**W-4507 Hasbergen(DE)**

(54) **Schleuderdüngerstreuer.**

(57) Schleuderdüngerstreuer mit einem Rahmen und einem Vorratsbehälter, unter dem zumindest zwei rotierend angetriebene Schleuderscheiben mit darauf angeordneten Wurfschaufeln angeordnet sind. Um einen Schleuderdüngerstreuer zu schaffen, der auf einfachste Weise mit wenigen Handgriffen vom Normalstreuen auf das Grenzstreuen umrüstbar ist, ist vorgesehen, daß zumindest für eine (6) der beiden Schleuderscheiben (6) zumindest eine austauschbare Wurfschaufel (sog. Grenzstreuschaufel) (28) zum Erzielen eines an der einen Seite des Streubildes mit steil abfallender Streuflanke (sog. Grenzstreubild) gegen die zum Normalstreuen vorgesehenen Wurfschaufeln zum Erzielen eines Streubildes mit seitlich flach abfallenden Streuflanken vorgesehen ist.

FIG. 3

# SCHLEUDERDÜNGERSTREUER

Die Erfindung betrifft einen Schleuderdüngerstreuer gemäß des Oberbegriffes des Patentanspruches 1.

Derartige Schleuderdüngerstreuer sind beispielsweise durch die deutschen Offenlegungsschriften 37 07 188 und 38 12 087 bekannt.

Bei dem Schleuderdüngerstreuer gemäß der deutschen Offenlegungsschrift 37 07 188 werden beim Einsatzwechsel des Schleuderdüngerstreuers von Normal- auf Spätdüngung die Normalstreu-schleuderscheiben gegen Grenzstreuschleuder-scheiben ausgetauscht.

Bei dem Schleuderdüngerstreuer gemäß der deutsche Offenlegungsschrift 38 12 087 sind Schleuderscheiben mit Grenzstreuschaufeln vorgesehen. Zum Einsatz des Schleuderdüngerstreuers zum Normaldüngen mit flach abfallenden Streubildern werden an die Grenzstreuschaufeln Verlängerungsstücke angesetzt.

Der Erfindung liegt die Aufgabe zugrunde, einen Schleuderdüngerstreuer zu schaffen, der auf einfachste Weise mit wenigen Handgriffen vom Normalstreuen auf das Grenzstreuen umrüstbar ist.

Diese Aufgabe wird durch das kennzeichnende Merkmal des Patentanspruches 1 gelöst. Infolge dieser Maßnahme ist es beispielsweise möglich, nur eine der Wurfschaufeln auf der Schleuderscheibe auszutauschen, um den Schleuderdüngerstreuer von Normaldüngen auf Grenzstreuen umzurüsten. Somit ist es äußerst einfach, das Grenzstreuen mit voller Arbeitsbreite durchzuführen. Dieses heißt, daß auf der einen Seite des Schleuderdüngerstreuers, und zwar auf der Seite zum Feldinneren, ein Streubild mit einer flach abfallenden Streuflanke erzielt wird, während auf der der Grenze zugewandten Seite des Schleuderdüngerstreuers ein Streubild mit einer seitlich steil abfallenden Streuflanke erzielt wird, so daß praktisch kein Dünger über die Grenze hinaus geworfen wird. Dieses ist im Zeichen des immer weiter zunehmenden Umweltschutzes von großer Bedeutung. Somit läßt sich also Grenzstreuen mit voller Arbeitsbreite durchführen. In bevorzugter Weise wird bei einem Schleuderdüngerstreuer, bei dem auf jeder Schleu-derscheibe zumindest zwei Wurfschaufeln angeord-net sind, deren Abstreukanten unterschiedliche Abstände zur Drehachse der Schleuderscheiben aufweisen, nur eine der Wurfschaufeln zum Normal-streuen gegen die Grenzstreuschaufel ausge-tauscht. Hierbei wird in bevorzugter Weise nur die längere der Normalstreuschaufeln gegen eine kürzere Grenzstreuschaufel ausgetauscht, wenn der Schleuderdüngerstreuer zum Grenzstreuen eingesetzt werden soll.

Um den Schleuderdüngerstreuer mit einer ein-zigen Grenzstreuschaufel für unterschiedliche Ar-beitsbreiten zum Grenzstreuen einsetzen zu können, ist vorgesehen, daß die Grenzstreuschaufel aus zwei zueinander verschiebbaren Teilen bestehenden Teleskopschaufel gebildet wird. Hierdurch kann durch die unterschiedliche Längeneinstellung der beiden Teile der Teleskopschaufel der Schleuderdüngerstreuer auf unterschiedliche Grenzstreuabstände eingestellt werden. Desweiteren ist es möglich, je nach den Erfordernissen in gewissen Bereichen die steil abfallende Streuflanke um einige Meter quer zur Fahrtrichtung hin- und herzuschieben, so daß je nach Einsatzfall, beispielsweise wenn die Grenze zwischen zwei Parzellen liegt, mit gleichbleibender Streustärke an die Grenze heranzustreuen, wobei noch etwas Dünger über die Grenze hinausfällt oder aber bei einem Einsatzfall, wenn die Grenze von einem Weg oder einem Gewässer gebildet wird, die steil abfallende Streukante von der Grenze wegzuziehen, so daß kein Dünger mehr über die Grenze, also auch nicht auf den angrenzenden Weg oder in das angrenzende Gewässer fällt.

In einer anderen Ausführung ist vorgesehen, daß zum Grenzstreuen die Normalstreuschaufeln gegen spezielle Schaufeln für das Grenzstreuen ausgetauscht werden.

Um eine möglichst variable Einstellung des Schleuderdüngerstreuers für verschiedene Düngersorten und für die verschiedenen Einsatzfälle zu erreichen, damit eine gleichmäßige Düngerverteilung bis an die Feldrandgrenze sichergestellt ist, ist vorgesehen, daß die Wurfschaufeln in Scheibenebene winkelverschwenkbar angeordnet sind, daß in dem Bereich der winkelverschwenkbaren Wurfschaufeln Einstellskalen für die Wurfschaufeln auf den Schleuderscheiben bzw. am Rande der Schleuderscheibe vorgesehen sind.

Eine äußerst einfache Umrüstung des Schleud-erdüngerstreuers vom Normalstreuen auf Grenz-streuen wird dadurch erreicht, daß die Wurfschau-feln mittels eines Schnellverschlusses auswechsel-bar auf den Schleuderscheiben angeordnet sind. Hierbei kann beispielsweise der Schnellverschluß als Knebelschraube oder als Knebelmutter ausgebildet sein, wobei die Wurfschaufeln mittels des Schnellverschlusses gleichzeitig winkelverstellbar ausgebildet sind.

In überraschender Weise hat sich bei einem Schleuderdüngerstreuer, bei dem zwei unterschiedlich lange Wurfschaufeln auf den Schleuderscheiben angeordnet sind, gezeigt, daß zum Grenzstreuen nur die längere der Wurfschaufeln gegen eine Grenzstreuschaufel ausgetauscht werden muß, während die kürzere Normalstreuwurfschaufel auf der Schleuderscheibe zum Grenzstreuen verbleiben kann. Hierdurch wird eine erhebliche Vereinfachung bei der Umrüstung des Schleuderdüngerstreuers erreicht. Es ist lediglich nur noch erforderlich, daß beim Grenzstreuen die auf der Schleuderscheibe beim Grenzstreuen verbleibende kürzere Wurfschaufel der Normalstreuwurfschaufeln zum Grenzstreuen gegenüber der Normalstreuposition der Wurfschaufel, bezogen auf die Drehrichtung der Schleuderscheibe, zurückverschwenkt wird, und daß die Grenzstreuschaufel eine kürzere wirksame Länge wie die kürzere Normalstreuschaufel aufweist.

Weiterhin ist vorgesehen, daß auch die Grenzstreuschaufeln an ihren Abwurfenden untere Leitflächen aufweisen, mittels derer die Düngerpartikel mit unterschiedlichen Wurfwinkeln abgeschleudert werden können. Hierdurch ist es in vorteilhafter Weise möglich, auch beim Spätdüngen das Grenzstreuen durchzuführen. Wie bereits angedeutet, weisen die Normalstreuschaufeln ebenfalls an ihrem Abwurfende untere Leitflächen auf, mittels derer die Düngerpartikel mit unterschiedlichen Abwurfwinkeln abgeschleudert werden können. Zum Spätdüngen werden also die Düngerpartikel mit einem größeren Abwurfwinkel abgeschleudert als beim Normaldüngen.

Weiterhin ist es möglich, daß unterschiedliche Streuschaufeln für das Normal- und Spätdüngen zum Einsatz kommen, wobei die Wurfschaufeln für das Normaldüngen mit flacher angestellten unteren Leitflächen ausgerüstet sind, während die Wurfschaufeln für das Spätdüngen (Grenzstreuschaufeln und Normalstreuschaufeln) mit äußeren unteren Leitflächen ausgerüstet sind, die einen größeren Winkel zur Horizontalen aufweisen.

Zusammenfassend werden die Vorteile der Erfindung nochmals dargestellt:
Dadurch, daß zumindest eine der beiden Schleuderscheiben mit austauschbarer Wurfschaufel zum Erzielen eines Streubildes mit seitlich steil abfallenden Streuflanke (sog. Grenzstreuschaufeln) gegen die zum Normalstreuen vorgesehen Streuschaufel zum Erzielen eines Streubildes mit seitlich flach abfallenden Streuflanken (sog. Normal-, Breit- oder Standardschaufeln) versehen ist, ist auf äußerst einfache Weise möglich, sämtliche Schleuderdüngerstreuer zum Grenzstreuen einzusetzen, wobei durch den Austausch zumindest einer der Wurfschaufeln gegen eine Grenzstreuschaufel der Dünger praktisch mit gleichmäßiger Streustärke bis an den Feldrand heran geworfen wird, ohne daß Düngerpartikel über die Feldrandgrenze gar nicht oder in nicht nenneswerter Weise hinausgeschleudert werden. Durch die winkelverschwenkbare Einstellung der Wurfschaufeln in Scheibenebene auf den Schleuderscheiben, wobei Einstellskalen für die Wurfschaufeln auf den Schleuderscheiben bzw. am Rand der Schleuderscheiben vorgesehen sind, können die Wurfschaufeln optimal eingestellt werden, so daß alle Düngersorten beim Einsatz des Schleuderdüngerstreuers mit der Grenzstreuschaufel in gleichmäßiger Weise bis an den Feldrand heran, verteilt werden können. Insbesondere durch die Auswahl der unterschiedlichen Grenzstreuschaufeln bzw. durch die unterschiedliche Längeneinstellung der Teleskopschaufeln sowie durch die Winkeleinstellung der Wurfschaufeln in Scheibenebene, ergibt sich der bisher nie erreichte Vorteil, daß der Landwirt je nach seinen Erfordernissen den Dünger mehr oder weniger dicht bis an die Feldrandgrenze in gleichmäßiger Weise mit einfachsten Mitteln bei einfacher Handhabung heranwerfen kann. Dieses spielt heute im Zeichen einer umweltschonenden Düngerausbringung eine äußerst große Rolle. Durch die Anordnung eines unteren Schwenkflügels mit einer unteren Leitfläche an der Grenzstreuschaufel, der in Verlängerung des unteren Steges der Wurfschaufel angeordnet und mit der Wurfschaufel in aufrechter Ebene schwenkbar verbunden ist, läßt sich der Schleuderdüngerstreuer beim Spätdüngen auch zum exakten Grenzstreuen einsetzen. Besonders einfach ist die Umrüstung des Schleuderdüngerstreuers von der Normal- auf Spätdüngung zu handhaben, da sich in überraschender Weise gezeigt hat, daß bei Schleuderdüngerstreuern, die je Schleuderscheibe Wurfschaufeln unterschiedlicher Länge aufweisen, daß nur die längere der Normalstreuschaufeln zum Grenzstreuen gegen eine Grenzstreuschaufel ausgetauscht werden muß, und daß die kürzere Normalstreuschaufel zum Grenzstreuen auf der Schleuderscheibe verbleiben kann. Hierdurch braucht also nur eine einzige Wurfschaufel ausgetauscht werden. Dieses ist äußerst kostengünstig und darüberhinaus auch einfach in der Handhabung.

Weitere Einzelheiten der Erfindung sind den übrigen Unteransprüchen, der Beispielsbeschreibung und den Zeichnungen zu entnehmen. Hierbei zeigen

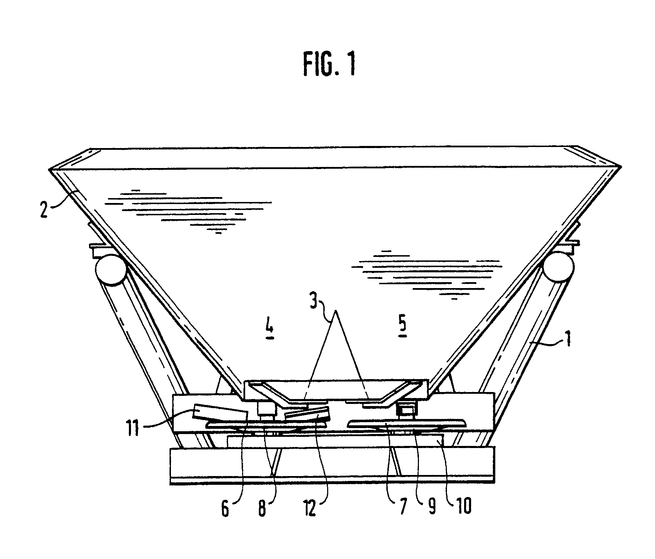

Fig. 1    den Schleuderdüngerstreuer in der Ansicht von hinten,

Fig. 2    die rechte der beiden Schleuderscheiben in der Draufsicht und in vergrößerter Darstellung, wobei die Schleuderscheibe mit Wurfschaufeln zum Normalstreuen versehen ist,

Fig. 3    die Schleuderscheiben gemäß Fig. 2, wobei jedoch die Schleuderscheibe mit zum Grenzstreuen eingestellten Wurfschaufeln ausgerüstet ist,

Fig. 4    die Anordnung der Grenzstreuschaufeln gemäß Fig. 3 in der Ansicht IV - IV,

Fig. 5 die Anordnung einer Grenzstreuschaufel für kleinere Arbeitsbreiten in
der gleichen Darstellungsweise wie
Fig. 4,

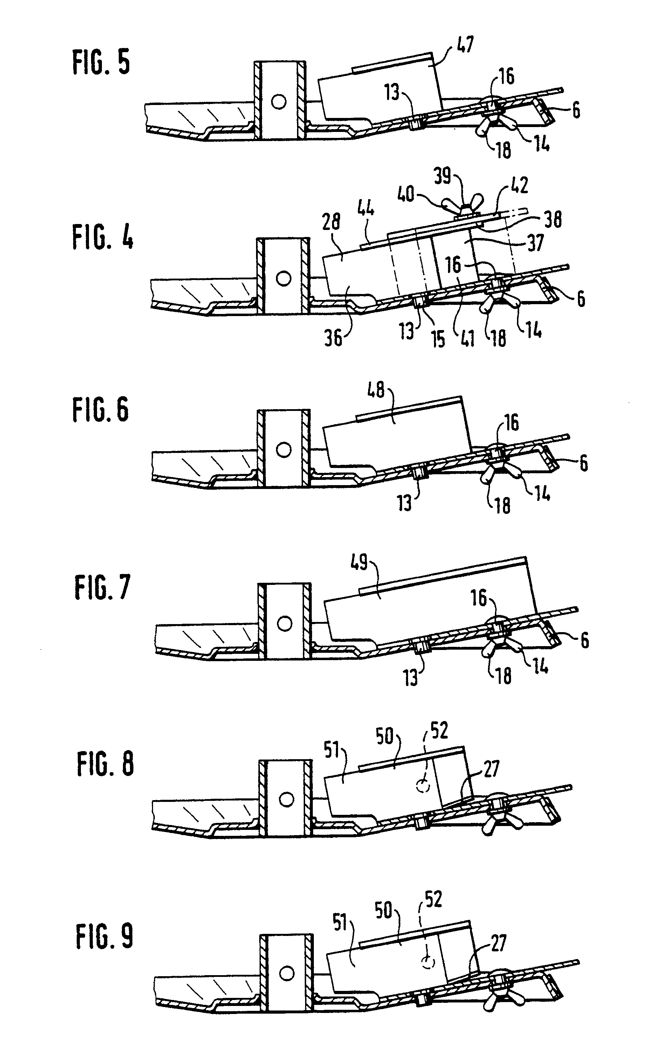

Fig. 6 die Schleuderscheibe mit einer
Grenzstreuschaufel mittlerer Arbeitsbreite in der Darstellungsweise gemäß Fig. 4,

Fig. 7 die Anordnung einer Grenzstreuschaufel für größere Arbeitsbreiten in
der Darstellungsweise gemäß Fig. 4,

Fig. 8 eine weitere Grenzstreuschaufel mit
Schwenkflügel, wobei der Schwenkflügel in Normalstreuposition angeordnet ist in der Darstellungsweise
gemnäß Fig. 4,

Fig. 9 die Grenzstreuwurfschaufel gemäß
Fig. 8, wobei sich der äußere
Schwenkflügel in Spätdüngungsposition befindet,

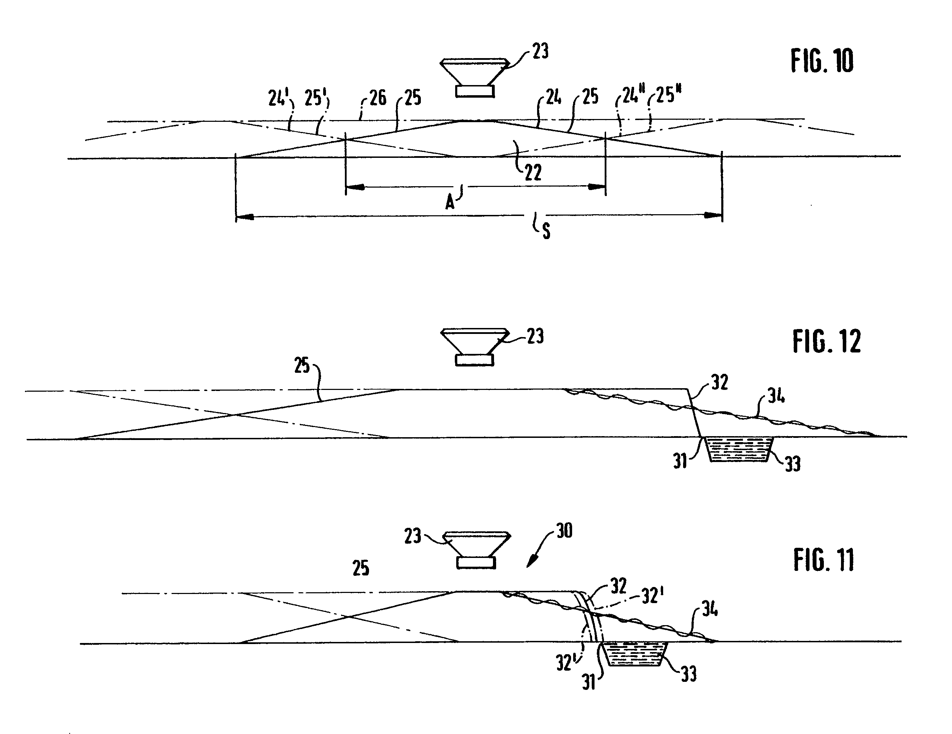

Fig. 10 ein Normalstreubild in Prinzipskizze,

Fig. 11 ein Grenzstreubild für kleinere Arbeitsbreiten in Prinzipdarstellung und

Fig. 12 ein Grenzstreubild für eine größere
Arbeitsbreite, ebenfalls in Prinzipdarstellung.

Der Schleuderdüngerstreuer weist den Rahmen
1 und den Vorratsbehälter 2 auf. Auf der Vorderseite des Rahmens 1 sind in bekannter und daher
nicht näher dargestellter Weise Dreipunktkupplungselemente zum Anbau des Schleuderdüngerstreuers an den Dreipunktkraftheber eines Schleppers angeordnet. Der Vorratsbehälter ist durch das
dachförmige Mittelteil 3 in seinem unteren Bereich
in die beiden Auslauftrichter 4 und 5 aufgeteilt.
Unterhalb der Auslauftrichter 4 und 5 befindet sich
jeweils eine rotierend angetriebene Schleuderscheibe 6 bzw. 7, die auf den Getriebeausgangswellen 8
und 9 des Zahnradgetriebes 10 drehfest angeordnet sind und ineinander entgegengesetzten Drehrichtungen rotierend von einer Kraftquelle, beispielsweise eines Ölmotors oder einer Zapfwelle
des den Schleuderdüngerstreuer tragenden
Schleppers, angetrieben werden.

Auf den Schleuderscheiben 6 und 7 sind jeweils die längere Wurfschaufel 11 und die kürzere
Wurfschaufel 12 angeordnet. Die Wurfschaufeln
der Schleuderscheibe 7 sind spiegelbildlich zu den
Wurfschaufeln 11 und 12 der Schleuderscheibe 6
aufgrund des einander entgegegesetzten Drehsinnes der Schleuderscheiben 6 und 7 ausgebildet.

Den Schleuderscheiben 6 und 7 wird über sich
in den Auslauftrichterböden befindlichen Auslauföffnungen, die über Schieber in unterschiedlichen
Öffnungsweiten einstellbar und zu verschließen
sind, der Dünger in einstellbaren Mengen zugeführt.

Mittels der auf den Schleuderscheiben 6 bzw.

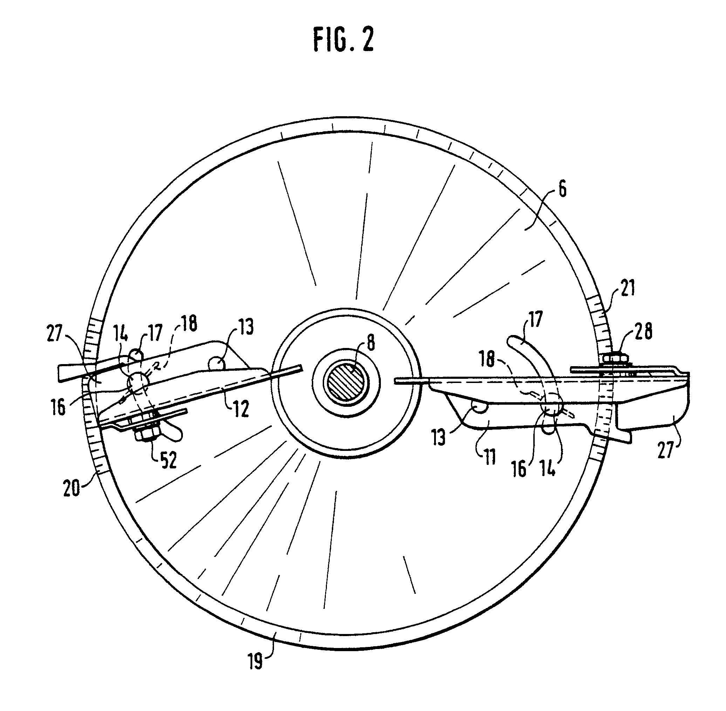

7, wobei gemäß Fig. 2 nur die linke Schleuderscheibe dargestellt ist, angeordneten, winkelverschwenkbaren Wurfschaufeln 11 und 12 wird der
auf der jeweiligen Schleuderscheibe 6 bzw. 7 auftreffende Düngemittelstrom gleichmäßig über genau einstellbare Arbeitsbreiten des Schleuderdüngerstreuers abgeschleudert. Die Wurfschaufel 12
weist eine kürzere Länge als die Wurfschaufel 11
auf, so daß die kürzeren Wurfschaufeln 12 die
Düngemittelpartikel über den inneren Bereich der
Arbeitsbreite abschleudern, während die längeren
Wurfschaufeln 11 die Düngemittelpartikel weiter
nach außen, also in den äußeren Bereichen der
Arbeitsbreite bzw. Streubreite abschleudern.

Die Wurfschaufeln 11 und 12 sind jeweils mittels des Bolzens 13 und der Knebelschraubenverbindung 14 auf der Schleuderscheibe 6 bzw. 7
befestigt. Der Bolzen 13 ist fest an der Wurfschaufel 11 bzw. 12 angeordnet und faßt in die sich in
der Schleuderscheibe 6 befindliche Bohrung 15.
Der Schraubbolzen 16, der Knebelschraubenverdung 14 faßt jeweils in das sich in der Schleuderscheibe 6 bzw. 7 befindliche Langloch 17. Unter
der Schleuderscheibe 6 bzw. 7 ist auf dem jeweiligen Schraubbolzen 16 jeweils die Knebelmutter 18
angeordnet. Durch Lösen der jeweiligen Knebelmutter 18 können die Wurfschaufeln 11 und 12
jeweils anhand der sich auf dem Außenrand 19
befindlichen Skalen 20 und 21 je nach Arbeitsbreite
und Düngersorte exakt eingestellt werden, so daß
eine gleichmäßige Düngerverteilung erreichbar
wird. Mittels der auf den Schleuderscheiben 6 und
7 angeordneten Wurfschaufeln 11 und 12 und entsprechender Winkeleinstellung je nach Düngersorte
und Arbeitsbreite, wie die Werte entsprechend in
der Streutabelle angegeben sind, läßt sich beispielsweise das in Fig. 10 dargestellte Normalstreubild 22 erzielen. Der Schleuderdüngerstreuer
ist hier mit Prinzipskizze dargestellt und in der Fig.
10 mit der Bezugsziffer 23 versehen. Der Dünger
wird, wie mit durchzogenen Linien dargestellt ist,
gemäß dem Grundstreubild 24 verteilt. Dieses
Grundstreubild 24 weist die flach abfallenden
Streuflanken 25 zu beiden Seiten des Düngerstreuers 23 auf. Durch die nebeneinander liegenden
Grundstreubilder 24' und 24", welche mit gestrichelten Linien dargestellt sind, und der entsprechenden Überlappung der flach abfallenden Streuflanken 25, 25' und 25" entsteht eine gleichmäßige
Düngerverteilung, wie durch die mit strichpunktierten Linien dargestellten Düngerverteilung 26 veranschaulicht ist.

Die Arbeitsbreite des Düngerstreuers ist mit A
bezeichnet, während die Streubreite mit S bezeichnet ist.

An den äußeren Enden der Wurfschaufeln 11
und 12 befinden sich die Schwenkflügel 27, welche
über einen Schwenkbolzen 28 jeweils in aufrechter Ebene schwenkbar an der Rückwand der Wurfschaufeln 11 und 12 angeordnet sind. In nach unten geschwenkter Position leiten die Schwenkflügel den Düngerstrom mit einem flachen Winkel zur Horizontalen ab. Diese Position ist die Normaldüngungsposition. Zum Spätdüngen, wenn bereits hoch aufgewachsenes Getreide gedüngt werden soll, werden die Schwenkflügel 27 nach oben geschwenkt, so daß sie den Dünger mit einem größeren Winkel als in der Normaldüngungsposition zur Horizontalen abschleudern. Hierdurch ist in einfacher Weise eine Spätdüngung des Getreides möglich.

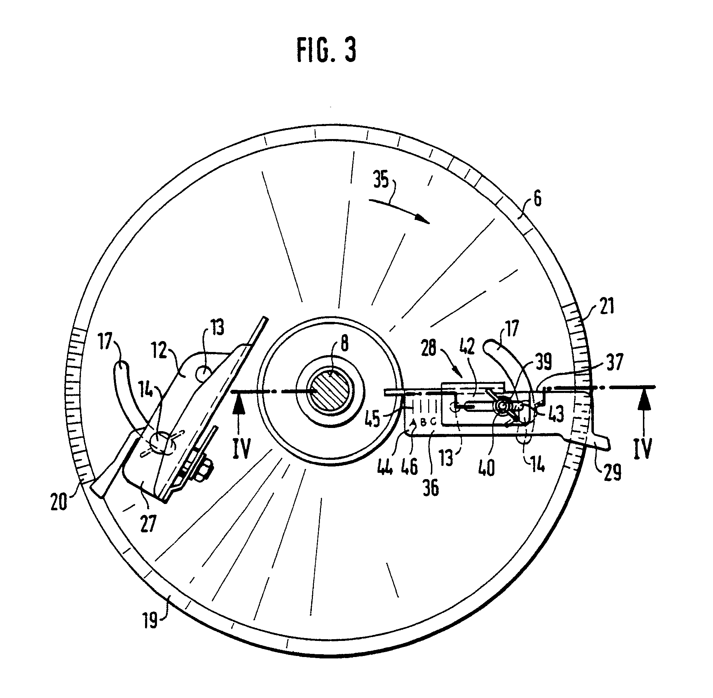

Um nun mit dem Schleuderdüngerstreuer auch an der Feldrandgrenze streuen zu können, so daß kein Dünger oder keine nennenswerte Düngermenge über die Feldrandgrenze hinausgeworfen wird, ist es erforderlich, auf der der Feldrandgrenze zugewandten Schleuderscheibe die längere Streuschaufel 11 gegen die Grenzstreuschaufel 28 ausgetauscht wird. Hierzu ist die längere Wurfschaufel 11 zum Normaldüngen austauschbar auf der Schleuderscheibe 6 angeordnet. Um die Wurfschaufel 11 gemäß Fig. 3 gegen die Grenzstreuschaufel 28 gemäß der Fig. 4 auszutauschen, wird die Knebelmutter 18 von dem Schraubbolzen 16 abgeschraubt. Dann läßt sich die Wurfschaufel 11 leicht von der Schleuderscheibe 6 abnehmen. Anschließend wird die Grenzstreuschaufel 28 auf die Schleuderscheibe 6 aufgesetzt. Hierzu wird der Bolzen 13 durch die Bohrung 15 und der Schraubbolzen 16 durch das Langloch 17 gesteckt. Anschließend wird die Knebelmutter 18 wieder auf den Schraubbolzen 16 aufgeschraubt. Entsprechend der Angabe in der Streutabelle werden die Wurfschaufeln 12 und 28 anhand des Zeigers 29 und den Skalen 27 und 28 auf die angegebenen Werte eingestellt. Mittels der Wurfschaufeln 12 und 28 läßt sich ein einseitig steil abfallendes Streubild erzielen. Die Streuflanke fällt auf der einen Seite steil ab. Mittels der Wurfschaufeln 12 und 28 läßt sich das in Fig. 11 dargestellte Grenzstreubild 30 erreichen. Auf der dem Feldinneren zugewandten Seite des Düngerstreuers wird der Dünger so abgeworfen, daß eine flach abfallende Streuflanke 25 erzielt wird. Auf der Feldrandgrenze 31 zugewandten Seite wird das Streubild mit der steil abfallenden Streuflanke 32 erreicht. Hierbei wird der Dünger bis knapp an die Felsrandgrenze 31, welche durch den Wassergraben 33 gebildet wird, herangeworfen. Durch die entsprechende Winkeleinstellung der Wurfschaufel 28 sowie der noch weiter unten beschriebenen Längeneinstellung der Wurfschaufel 28, läßt sich die Streuflanke 32, wie durch die strichpunktierten Linien 32' und 32'' dargestellt ist, verschieben. Mittels der gewellten Linie 34 ist das Streubild gemäß Fig. 11 vervollständigt. Somit wird deutlich, daß das Streubild mit der flach abfallenden Streuflanke gemäß Fig. 10 auf der einen Seite (wie durch Linie 34 angedeutet) durch den Einsatz der Grenzstreuschaufel 28 in ein Grenzstreubild (Fig. 11) mit einer steil abfallenden Streuflanke 32 verändert wird.

Zur Erzielung dieses Grenzstreubildes gemäß Fig. 11 ist zunächst der Austausch der längeren Wurfschaufel zum Normalstreuen gegen die Grenzstreuschaufel 28 erforderlich. Die kürzere Grenzstreuschaufel wird zur Erzielung des Grenzstreubildes gemäß Fig. 11 benutzt. Um in Verbindung mit der Grenzstreuschaufel 28 und der kürzeren Streuschaufel 12 das Grenzstreubild gemäß Fig. 11 zu erreichen, ist es erforderlich, daß die kurze Normalstreuschaufel 12 zum Grenzstreuen gegenüber der Normalstreuposition, wie in Fig. 2 dargestellt, bezogen auf die Drehrichtung 35 der Schleuderscheibe, in die in Fig. 3 eingezeichnete Position zurückverschwenkt wird. In den meisten Einsatzfällen muß die Grenzstreuschaufel 28 eine kürzere wirksame Länge wie die kürzere Normalstreuschaufel 12 aufweisen. Die Grenzstreuschaufel 28 ist ebenfalls winkelverschwenkbar auf der Schleuderscheibe 6 angeordnet.

Die Grenzstreuschaufel 28 besteht aus den beiden zueinander in Längsrichtung der Wurfschaufel verschiebbaren Teilen 36 und 37. Das innere Teil 36 ist mittels des Bolzens 6 und der Knebelschraubenverbindung 14 auf der Schleuderscheibe 6 in Scheibenebene winkelverschwenkbar angeordnet. Auf dem oberen Quersteg 38 ist der Schraubbolzen 39 befestigt. Auf dem Schraubbolzen 39 ist die Knebelmutter 40 aufgeschraubt. Das äußere Teil 37 weist die Rückwand 41 auf. Weiterhin weist das äußere Teil 37 den Quersteg 42 mit dem Langloch 43 auf. In das Langloch 43 faßt der Schraubbolzen 39. Über die Knebelschraube 40 läßt sich das äußere Teil 37 exakt gegenüber dem inneren Teil 36 einstellen. Zur exakten Längeneinstellung der Grenzstreuschaufeln 28 ist auf der Oberseite des Steges 44 des inneren Teiles 36 die Skala 45 mit den zugeordneten Symbolen 46 vorgesehen.

Zur Erzielung unterschiedlicher Arbeitsbreiten mit steil abfallender Streustärke beim Grenzstreuen läßt sich also die Wurfschaufel 28 durch die entsprechende Einstellung der Teile 36 und 37 zueinander über die Skala 45 und die Knebelschraube 40 in verschiedenen Längen genau einstellen.

Durch eine entsprechende Längenänderung der Grenzstreuschaufel 28 sowie einer entsprechenden Winkeleinstellung der Grenzstreuschaufel 28 bzw. der Wurfschaufel 12 läßt sich auch das Grenzstreubild gemäß Fig. 12 mit größerer Streu- und Arbeitsbreite erzielen.

Um mit der Grenzstreuschaufel 28 auch beim Spätdüngen arbeiten zu können, d.h., daß auch beim Spätdüngen das Grenzstreuen mit einer steil abfallenden Streuflanke des Streubildes durchgeführt werden kann, wie in den Fig. 11 und 12 dargestellt ist, ist es erforderlich, an dem äußeren Ende des äußeren Teiles 37 der Grenzstreuschaufel 28 einen wegen der Übersichtlichkeit nicht dargestellte Schwenkflügel 27 entsprechend dem an der kürzeren Wurfschaufel 12 angeordneten vorzusehen.

Ein weiteres Ausführungsbeispiels einer Grenzstreuschaufel zeigt die Fig. 5. Diese Grenzstreuschaufel 47 wird zum Grenzstreuen bei kleiner Arbeitsbreite eingesetzt. Diese Grenzstreuschaufel 47 ist in vorbeschriebener Weise gegen die lange Normalstreuschaufel 11 austauschbar.

Die Fig. 6 zeigt eine weitere Grenzstreuschaufel 48 für das Grenzstreuen bei mittlerer Arbeitsbreite. Diese Grenzstreuschaufel 48 ist ebenfalls gegen die längere Wurfschaufel 11 zum Normalstreuen in vorbeschriebener Weise austauschbar.

Die Fig. 7 zeigt eine weitere Grenzstreuschaufel 49 für größere Arbeitsbreiten, die ebenfalls in vorbeschriebener Weise gegen die längere Wurfschaufel 11 zum Grenzstreuen austauschbar ist.

Die Fig. 8 zeigt eine weitere Grenzstreuschaufel 50 mit einem äußeren Schwenkflügel 27. Dieser Schwenkflügel 27 ist über den Schwenkbolzen 28 in aufrechter Ebene verschwenkbar an dem inneren Teil der Wurfschaufel 51 befestigt. In der in Fig. 5 dargestellten Position befindet sich der Schwenkflügel 27 in der Normaldüngungsposition.

Die Fig. 9 zeigt die Grenzstreuschaufel 50 gemäß Fig. 8, wobei der äußere Schwenkflügel 70 in nach oben geschwenkter Stellung dargestellt ist. Diese Stellung des Schwenkflügels 27 entspricht der Spätdüngungsstellung, so daß der Dünger mit einem größeren Winkel zur Horizontalen von der Wurfschaufel 50 über den Schwenkflügel 27 abgeschleudert wird.

## Patentansprüche

1. Schleuderdüngerstreuer mit einem Rahmen und einem Vorratsbehälter, unter dem zumindest zwei rotierend angetriebene Schleuderscheiben mit darauf angeordneten Wurfschaufeln angeordnet sind, dadurch gekennzeichnet, daß zumindest für eine (6) der beiden Schleuderscheiben (6,7) zumindest eine austauschbare Wurfschaufel (sog. Grenzstreuschaufel) (28,47,48,49,50) zum Erzielen eines an der einen Seite des Streubildes mit steil abfallender Streuflanke (sog. Grenzstreubild) gegen die zum Normalstreuen vorgesehenen Wurfschaufeln zum Erzielen eines Streubildes mit seitlich flach abfallenden Streuflanken vorgesehen ist.

2. Schleuderdüngerstreuer nach Anspruch 1, wobei auf jeder Schleuderscheibe zumindest zwei Wurfschaufeln angeordnet sind, deren Abstreukanten unterschiedliche Abstände zur Drehachse der Schleuderscheiben aufweisen, dadurch gekennzeichnet, daß die eine der Wurfschaufeln (11) zum Normalstreuen gegen die Grenzstreuschaufel (28,47,48,49,50) austauschbar ist.

3. Schleuderdüngerstreuer nach einem oder mehreren der vorstehenden Ansprüche, dadurch gekennzeichnet, daß nur die längere (11) der Normalstreuschaufeln (11,12) gegen eine kürzere Grenzstreuschaufel (28,47,48,49,50) ausgetauscht wird, wenn der Schleuderdüngerstreuer zum Grenzstreuen eingesetzt wird.

4. Schleuderdüngerstreuer nach einem oder mehreren der vorstehenden Ansprüche, dadurch gekennzeichnet, daß die Grenzstreuschaufel (28) als aus zwei zueinander verschiebbaren Teilen (36,37) bestehende Teleskopschaufel gebildet wird.

5. Schleuderdüngerstreuer nach einem oder mehreren der vorstehenden Ansprüche, dadurch gekennzeichnet, daß zum Grenzstreuen die Normalstreuschaufeln (11,12) gegen spezielle Schaufeln (47,48,49,50) für das Grenzstreuen ausgetauscht werden.

6. Schleuderdüngerstreuer nach einem oder mehreren der vorstehenden Ansprüche, dadurch gekennzeichnet, daß die Wurfschaufeln (11,12,28,47,48,49,50) in Scheibenebene winkelverschwenkbar angeordnet sind, daß im Bereich der winkelverschwenkbaren Wurfschaufeln (11,12,28,47,48,49,50) Einstellskalen (20,21) für die Wurfschaufeln auf den Schleuderscheiben (6,7) bzw. am Rande der Schleuderscheibe (6,7) vorgesehen sind.

7. Schleuderdüngerstreuer nach einem oder mehreren der vorstehenden Ansprüche, dadurch gekennzeichnet, daß die jeweils auf den Schleuderscheiben (6,7) angeordneten Wurfschaufeln (11,12), insbesondere die Normal-, Breit- oder Standardstreuschaufeln mit ihrem Abstreuende jeweils einen unterschiedlichen radialen Abstand zur Drehachse aufweisen.

8. Schleuderdüngerstreuer nach einem oder mehreren der vorstehenden Ansprüche, dadurch gekennzeichnet, daß die Wurfschaufeln mittels eines Schnellverschlusses (14) auswechselbar auf den Schleuderscheiben angeordnet sind.

9. Schleuderdüngerstreuer nach einem oder mehreren der vorstehenden Ansprüche, dadurch gekennzeichnet, daß der Schnellverschluß (14) als Knebelschraube oder Knebelmutter (18) ausgebildet ist, und daß die Wurfschaufeln (11,12,28,47,48,49,50) mittels des Schnellverschlußes (14) winkelverstellbar sind.

10. Schleuderdüngerstreuer nach einem oder mehreren der vorstehenden Ansprüche, dadurch gekennzeichnet, daß die Wurfschaufeln (11,12,28,47,48,49,50) mittels Knebelschrauben (18) werkzeuglos verstellbar bzw. einstellbar auf den Schleuderscheiben (6,7) angeordnet sind.

11. Schleuderdüngerstreuer nach einem oder mehreren der vorstehenden Ansprüche, dadurch gekennzeichnet, daß je Wurfschaufel (11,12,28,47,48,49,50) nur eine Knebelschraube (18) vorgesehen, wobei diese Knebelschraube (18) in der Nähe des äußeren Randes der Scheibe (6,7) angeordnet ist, daß die Wurfschaufel (11,12,28,47,48,49,50) auf ihrer der Drehachse zugewanden Seite an ihrem unteren Steg einen nach unten ragenden Bolzen (13) aufweist, welcher in eine sich in der Schleuderscheibe befindliche Bohrung (15) faßt.

12. Schleuderdüngerstreuer nach einem oder mehreren der vorstehenden Ansprüche, dadurch gekennzeichnet, daß die beim Grenzstreuen auf der Schleuderscheibe (6) verbleibene kürzere Wurfschaufel (12) zum Grenzstreuen gegenüber der Normalstreuposition der Wurfschaufel (12), bezogen auf die Drehrichtung (35) der Schleuderscheibe (6), zurückverschwenkt wird, und daß die Grenzstreuschaufeln (28) eine kürzere wirksame Länge wie die kürzere Normalstreuschaufel (12) aufweist.

13. Schleuderdüngerstreuer nach einem oder mehreren der vorstehenden Ansprüche, dadurch gekennzeichnet, daß die Grenzstreuschaufel (28,47,48,49,50) ebenfalls winkelverschwenkbar auf der Schleuderscheibe (6) angeordnet ist.

14. Schleuderdüngerstreuer nach einem oder mehreren der vorstehenden Ansprüche, dadurch gekennzeichnet, daß für verschiedene Arbeitsbreiten unterschiedlich lange Grenzstreuschaufeln (47,48,49) vorgesehen sind.

15. Schleuderdüngerstreuer nach einem oder mehreren der vorstehenden Ansprüche, dadurch gekennzeichnet, daß die Grenzstreuschaufeln (28) aus zwei teleskopartig zueinander ausziehbaren und in unterschiedlichen Längen einstellbaren Teilen (36,37) besteht, wobei auf der Oberseite der teleskopartigen Grenzstreuschaufel (28) Skalen (45) mit zugeordneten Symbolen (46) vorgesehen sind, und daß diese Symbole (46) anders ausgebildet sind wie die für die Einstellung der Winkel vorgesehenen Symbole.

16. Sohleuderdüngerstreuer nach einem oder mehreren der vorstehenden Ansprüche, dadurch gekennzeichnet, daß die Grenzstreuschaufeln (28,47,48,49,50) an ihrem Abwurfende untere Leitflächen (27) aufweisen, mittels derer die Düngerpartikel mit unterschiedlichen Abwurfwinkeln abgeschleudert werden können.

17. Schleuderdüngerstreuer nach einem oder mehreren der vorstehenden Ansprüche, dadurch gekennzeichnet, daß die Leitflächen (27) in aufrechter Ebene winkelverschwenkbar angeordnet sind.

18. Schleuderdüngerstreuer nach einem oder mehreren der vorstehenden Ansprüche, dadurch gekennzeichnet, daß Grenzstreuschaufeln mit unterschiedlich angestellten unteren Leitflächen an ihrem Abwurfende vorgesehen sind.

# FIG. 1

# FIG. 2

# FIG. 3

FIG. 5

47
13
16
6
18
14

FIG. 4

39
40
42
28
44
38
37
16
6
36
13
15
41
18
14

FIG. 6

48
16
6
13
18
14

FIG. 7

49
16
6
13
18
14

FIG. 8

51
50
52
27

FIG. 9

51
50
52
27

FIG. 10

FIG. 12

FIG. 11

EP 0 440 882 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 281 885 (AMAZONENWERKE) <br> * Spalte 16, Zeile 16 - Spalte 29, Zeile 5; Abbildungen 1-36 * <br> — — — | 1-10, 12-15,17 | A 01 C 17/00 |
| X | EP-A-0 158 335 (AMAZONENWERKE) <br> * Seite 9, Zeile 2 - Seite 17, Zeile 20; Abbildungen 1-18 * <br> — — — | 1-3,5,7,8, 16-18 | |
| X | EP-A-0 330 920 (AMAZONENWERKE) <br> * Spalte 4, Zeile 33 - Spalte 11, Zeile 33; Abbildungen 1-15 * <br> — — — | 1-3,5-7, 12-15 | |
| X | EP-A-0 017 128 (AMAZONENWERKE) <br> * Seite 6, Zeile 21 - Seite 10, Zeile 26; Abbildungen 1-3 * <br> — — — — — | 1,12-14, 16-18 | |

|  | RECHERCHIERTE SACHGEBIETE (Int. Cl.5) |
|---|---|
|  | A 01 C |

Der vorliegende Recherchenbericht wurde für alle Patentansprüche erstellt

| Recherchenort | Abschlußdatum der Recherche | Prüfer |
|---|---|---|
| Den Haag | 14 Mai 91 | VERMANDER R.H. |